# EUROPEAN PATENT SPECIFICATION

(11) **EP 3 117 989 B1**
(45) Date of publication and mention of the grant of the patent: **23.05.2018**
(21) Application number: 15760995.9
(22) Date of filing: 23.01.2015
(51) Int. Cl.: B32B 27/30, C08J 7/04

(54) **BARRIER LAMINATE, GAS BARRIER FILM, LAMINATE FILM, INFUSION SOLUTION BAG, AND METHOD FOR PRODUCING BARRIER LAMINATE**
SPERRSCHICHTLAMINAT, GASSPERRFOLIE, LAMINATFOLIE, BEUTEL FÜR INFUSIONSLÖSUNGEN, VERFAHREN ZUR HERSTELLUNG DES SPERRSCHICHTLAMINATS
STRATIFIÉ BARRIÈRE, FILM BARRIÈRE AU GAZ, FILM STRATIFIÉ, POCHE DE SOLUTION DE PERFUSION, ET PROCÉDÉ DE PRODUCTION D'UN STRATIFIÉ BARRIÈRE

(30) Priority: 12.03.2014 JP 2014049284
(43) Date of publication of application: 18.01.2017
(73) Proprietor: FUJIFILM Corporation, Tokyo 106-8620 (JP)
(72) Inventor: IWASE Eijiro, Ashigarakami-gun Kanagawa 250-0193 (JP)
(74) Representative: Hoffmann Eitle
(86) International application number: PCT/JP2015/051817
(87) International publication number: WO 2015/136993

(56) References cited:
- WO-A1-2006/115085
- WO-A1-2012/043823
- WO-A1-2014/046182
- JP-A- H11 166 030
- JP-A- 2002 256 045
- JP-A- 2010 265 440
- JP-A- 2011 056 908
- JP-A- 2011 526 646
- JP-A- 2012 218 377
- JP-A- 2012 218 378
- JP-A- 2013 210 551

## Description

### BACKGROUND OF THE INVENTION

### 1. Field of the Invention

The present invention relates to a barrier laminate and a gas barrier film including the barrier laminate. In addition, the present invention relates to a laminated film including the barrier laminate, an infusion solution bag using the laminated film, and a method of manufacturing a barrier laminate.

### 2. Description of the Related Art

A gas barrier film including a barrier laminate, in which an organic layer and an inorganic layer are laminated on a plastic film as a substrate, has a function of blocking water vapor and oxygen and is used in various fields.

For example, JP2012-75716A discloses a technique in which a barrier laminate is combined with a resin film while maintaining a high barrier layer performance, which is obtained by a laminate structure of a barrier laminate, and in which this combination is applied to an infusion solution bag. JP2012-218378A investigates a configuration of a barrier laminate which is suitable for use in an infusion solution bag in consideration of stress, which is generated by pressurization and by compression and shrinkage during heating and cooling when the barrier laminate is combined with a resin film by heat sealing. WO2012-043823A discloses an infusion solution bag including a bag made of a resin film including polyethylene and/or polypropylene, and a barrier layer provided on at least one surface of the bag, wherein the barrier layer has a structure in which a first organic layer, an inorganic layer and a second organic layer mutually adjoin in this order. The second organic layer in WO2012-043823A is formed by curing a polymerizable compound having an ethylenic unsaturated bond at the terminal or the side chain, the ethylenic unsaturated bond including e.g. (meth)acrylate-based compounds.

### SUMMARY OF THE INVENTION

In order to form an infusion solution bag, not only the combining of a barrier laminate and a resin film but also punching, trimming, and intermediate processing for forming a bag shape are necessary. In addition, when an infusion solution bag is used, stress is likely to be applied to the infusion solution bag by mishandling of the user or dropping. When a barrier laminate peels off from an infusion solution bag due to the above-described processing and stress, of course, barrier properties cannot be maintained, and chemicals in the infusion solution bag deteriorate.

An object of the present invention is to provide a barrier laminate and a gas barrier film, which is hard to break and can maintain satisfactory barrier properties when used in an infusion solution bag. Another object of the present invention is to provide a laminated film using the barrier laminate or the gas barrier film, and an infusion solution bag using the laminated film.

The present inventors presumed that, when used in an infusion solution bag, a barrier laminate and a gas barrier film are likely to be fractured due to the following two reasons. Firstly, interfacial peeling is likely to occur due to an organic layer which is formed on a surface of an inorganic layer in a barrier laminate. Secondly, interfacial peeling is likely to occur between an organic layer, which is the outermost layer of a barrier laminate, and an adhesive layer for adhesion with a bag due to, for example, insufficient adhesion between the organic layer and the adhesive layer. Focusing on that these two reasons relate to an organic layer present between an adhesive layer and an inorganic layer, the present inventors further repeated investigation on the organic layer, thereby completing the present invention.

That is, the present invention provides the following [1] to [16].
[1] A barrier laminate comprising a first organic layer, an inorganic layer, and a second organic layer in this order,
   in which the second organic layer is formed by curing a polymerizable composition which is directly applied to a surface of the inorganic layer,
   the polymerizable composition includes a urethane acrylate polymer,
   the urethane acrylate polymer has a structure which includes an acrylic main chain and a side chain including a urethane polymer unit or a urethane oligomer unit, and
   the side chain has an acryloyl group at a terminal position of the side chain.
[2] The barrier laminate according to [1],
   in which a weight average molecular weight of the urethane acrylate polymer is 10,000 or higher.
[3] The barrier laminate according to [1] or [2],
   in which an acrylic equivalent of the urethane acrylate polymer is 500 or higher.
[4] The barrier laminate according to any one of [1] to [3],
   in which the polymerizable composition includes one or more selected from the group consisting of (meth)acrylate, urethane (meth)acrylate, polyester (meth)acrylate, epoxy (meth)acrylate, an acrylic polymer, and a urethane polymer.
[5] The barrier laminate according to any one of [1] to [4],
   in which the polymerizable composition includes a silane coupling agent.
[6] The barrier laminate according to any one of [1] to [5],
   in which a content of the urethane acrylate polymer in the polymerizable composition is 5 mass% or higher with respect to solid contents of the polymerizable composition.
[7] The barrier laminate according to any one of [1] to [6],
   in which the first organic layer and the inorganic layer are in contact with each other.
[8] The barrier laminate according to any one of [1] to [7],
   in which a pencil hardness of the second organic layer is 4B or higher and wherein the pencil hardness was measured and evaluated according to JIS K 5600-5-4.
[9] The barrier laminate according to any one of [1] to [8],
   in which Tg of the first organic layer is higher than Tg of the second organic layer.
[10] A gas barrier film comprising a substrate film and the barrier laminate according to any one of [1] to [9],
   in which the substrate film, the first organic layer, the inorganic layer, and the second organic layer are provided in this order.
[11] The gas barrier film according to [10],
   in which the first organic layer is formed by curing a polymerizable composition which is directly applied to a surface of the substrate film.
[12] A laminated film comprising a substrate film, the barrier laminate according to any one of [1] to [9], an adhesive layer, and a sealant film in this order,
   in which the second organic layer and the adhesive layer are in direct contact with each other.
[13] The laminated film according to [12],
   in which the first organic layer is formed by curing a polymerizable composition which is directly applied to a surface of the substrate film.
[14] The laminated film according to [13],
   in which the sealant film includes a polyethylene resin and/or a polypropylene resin.
[15] The laminated film according to [13] or [14],
   in which the adhesive layer is formed of a polyurethane adhesive.
[16] An infusion solution bag comprising the laminated film according to any one of [12] to [15].
[17] A barrier laminate comprising a first organic layer, an inorganic layer, and a second organic layer in this order,
   wherein the second organic layer includes a urethane acrylate polymer and is directly formed on the inorganic layer,
   the urethane acrylate polymer has a structure which includes an acrylic main chain and a side chain including a urethane polymer unit or a urethane oligomer unit, and
   the side chain has an acryloyl group at a terminal position of the side chain.
[18] A method of manufacturing a barrier laminate, the method comprising:
   a step of forming a first organic layer;
   a step of forming an inorganic layer on the first organic layer; and
   a step of forming a second organic layer by directly applying a polymerizable composition to a surface of the inorganic layer and curing the polymerizable composition,
   in which the polymerizable composition includes a urethane acrylate polymer, the urethane acrylate polymer has a structure which includes an acrylic main chain and a side chain including a urethane polymer unit or a urethane oligomer unit, and
   the side chain has an acryloyl group at a terminal position of the side chain.

According to the present invention, there are provided a barrier laminate and a gas barrier film, which is hard to destroy and can maintain satisfactory barrier properties when used in an infusion solution bag. According to the present invention, an infusion solution bag, in which the barrier layer is hard to peel off from a bag and stability and gasbarrier properties are satisfactory, can be formed even when an impact of processing, dropping, is applied to the infusion solution bag after the barrier layer adhere to the bag, whose outermost layer is formed of a resin film, using a heat sealing method.

### BRIEF DESCRIPTION OF THE DRAWINGS

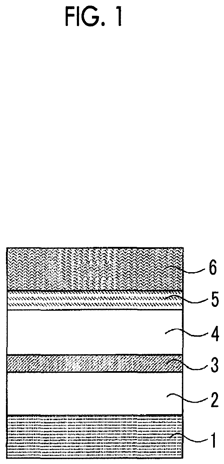

Fig 1 is a schematic cross-sectional view showing an example of a laminated film according to the present invention.

### DESCRIPTION OF THE PREFERRED EMBODIMENTS

Hereinafter, the details of the present invention will be described. In this specification of the present application, numerical ranges represented by "to" include numerical values before and after "to" as lower limits and upper limits. In this specification, "(meth)acrylate" represents "either or both of acrylate and methacrylate". The same shall be applied to "(meth)acryloyl group".

### (Barrier Laminate)

A barrier laminate according to the present invention includes a first organic layer, an inorganic layer, and a second organic layer in this order. This second organic layer contacts the inorganic layer. In the barrier laminate according to the present invention, in particular, the second organic layer is formed by curing a polymerizable composition which is directly applied to a surface of the inorganic layer, and the polymerizable composition includes a specific urethane acrylate polymer described below. The second organic layer, which is formed by curing the polymerizable composition, has a structure which includes "an acrylic main chain" and "a side chain including a urethane polymer unit or a urethane oligomer unit", and an acryloyl group is present at a terminal position of the side chain.

In the embodiment, the first organic layer and the second organic layer are the outermost layers among organic layers in the barrier laminate. The barrier laminate may or may not include another constituent layer that is provided outside of the first organic layer. For example, in a gas barrier film described below, the first organic layer may be directly formed on a surface of a substrate film without providing another constituent layer outside of the first organic layer. In addition, a constituent layer such as an adhesive layer may be provided outside of the first organic layer. The barrier laminate may or may not include another constituent layer that is provided outside the second organic layer. However, it is preferable that another constituent layer is not provided outside the second organic layer. For example, the second organic layer is the outermost layer of the barrier laminate. When the barrier laminate is used in a laminated film described below, it is preferable that the adhesive layer is provided on a surface of the second organic layer.

In addition to the first organic layer, the second organic layer, and the inorganic layer in contact with the second organic layer, the barrier laminate may further include another inorganic layer and another organic layer such that two or more organic layers and two or more inorganic layers are alternately laminated each other. However, it is preferable that the barrier laminate does not include another inorganic layer or another organic layer and has a structure in which the inorganic layer in contact with the second organic layer is also in contact with the first organic layer. The total number of organic layers and inorganic layers constituting the barrier laminate is not particularly limited but, typically, is preferably 3 to 20, more preferably 3 to 5, and most preferably 3. In addition, the barrier laminate may include another constituent layer in addition to the organic layer and the inorganic layer.

In the barrier laminate, a composition constituting the barrier laminate may include a so-called gradient material layer in which an organic region and an inorganic region changes continuously in a thickness direction of the barrier laminate. In particular, the gradient material layer may be provided between a specific organic layer and an inorganic layer which is directly formed on a surface of the specific organic layer, for example, between the first organic layer and the inorganic layer. Examples of the gradient material layer include a material described in "Journal of Vacuum Science and Technology A, Vol. 23, pp. 971-977 (2005, American Vacuum Society)" by Kim et al. and a continuous layer described in US2004/46497A in which an interface is not formed between an organic region and an inorganic region. Hereinafter, in order to simplify the description, the organic layer and the organic region will be referred to as "organic layer", and the inorganic layer and the inorganic region will be referred to as "inorganic layer".

### (Organic Layer)

Hereinafter, a polymerizable composition for forming an organic layer will be described. Unless specified otherwise, the following description is common to the configurations and preparation of the second organic layer, the first organic layer, and other organic layers.

### (Polymerizable Compound)

The first organic layer and other organic layers are formed, preferably, by curing a polymerizable composition including a polymerizable compound. In addition, the second organic layer is formed by curing a polymerizable composition including a urethane acrylate polymer, and the polymerizable composition for forming the second organic layer may include a polymerizable compound in addition to the urethane acrylate polymer.

It is preferable that the polymerizable compound is a compound having an ethylenically unsaturated bond at a terminal position (of the side chain) or a side chain and/or a compound having epoxy or oxetane at a terminal position (of the side chain) or a side chain. It is more preferable that the polymerizable compound is a compound having an ethylenically unsaturated bond at a terminal position (of the side chain) or a side chain. Examples of the compound having an ethylenically unsaturated bond at a terminal position (of the side chain) or a side chain include a (meth)acrylate compound, an acrylamide compound, a styrene compound, and maleic anhydride. Among these, a (meth)acrylate compound is preferable, and an acrylate compound is more preferable.

As the (meth)acrylate compound, for example, (meth)acrylate, urethane (meth)acrylate, polyester (meth)acrylate, or epoxy (meth)acrylate is preferable.

As the styrene compound, for example, styrene, α-methylstyrene, 4-methylstyrene, divinylbenzene, 4-hydroxystyrene, or 4-carboxystyrene is preferable.

As the (meth)acrylate compound, specifically, for example, a compound described in paragraphs "0024" to "0036" of JP2013-43382A or paragraphs "0036" to "0048" of JP2013-43384A can be used.

### (Additive Included in Polymerizable Composition for Forming Second Organic Layer)

In addition to the urethane acrylate polymer, the polymerizable composition for forming the second organic layer may include an additive such as a monomer, an oligomer, or a polymer. The additive may be a polymerizable compound or a non-polymerizable compound. Examples of the additive include the above-described polymerizable compounds, polyester, an acrylic polymer, a methacrylic polymer, a methacrylic acid-maleic acid copolymer, polystyrene, a transparent fluororesin, polyimide, fluorinated polyimide, polyamide, polyamide imide, polyether imide, cellulose acylate, a urethane polymer, polyether ether ketone, polycarbonate, alicyclic polyolefin, polyarylate, polyethersulfone, polysulfone, fluorene ring-modified polycarbonate, alicyclic modified polycarbonate, fluorene ring-modified polyester, and an organic silicon polymer such as polysiloxane. Among these, the above-described polymerizable compounds, an acrylic polymer, or a urethane polymer is preferable. As the polymerizable compound, the (meth)acrylate compound is preferable.

### (Polymerization Initiator)

The polymerizable composition for forming an organic layer may include a polymerization initiator. When the polymerization initiator is used, the content thereof is preferably 0.1 mol% or higher and more preferably 0.5 mol% to 5 mol% with respect to the total amount of the compound contributing to the polymerization. With this composition, a polymerization reaction during which an active component-producing reaction occurs can be appropriately controlled. Examples of a photopolymerization initiator include IRGACURE series manufactured by Ciba Specialty Chemicals Inc. (for example, IRGACURE 651, IRGACURE 754, IRGACURE 184, IRGACURE 2959, IRGACURE 907, IRGACURE 369, IRGACURE 379, and IRGACURE 819), DAROCURE series (for example, DAROCURE TPO and DAROCURE 1173), QUANTACURE PDO, and EZACURE series manufactured by Lamberti S.p.A. (for example, EZACURE TZM, EZACURE TZT, and EZACURE KTO46).

### (Silane Coupling Agent)

The polymerizable composition for forming an organic layer may include a silane coupling agent. Examples of the silane coupling agent include: a compound having a structure in which a hydrolyzable reactive group such as an alkyloxy group (for example, a methoxy group or an ethoxy group) or an acetoxy group and a substituent which has one or more reactive groups selected from an epoxy group, a vinyl group, an amino group, a halogen group, a mercapto group, and a (meth)acryloyl group are bonded to the same silicon atom; and a compound having a partial structure in which two silicon atoms are bonded to each other through an oxygen atom or -NH- and having a structure in which the above-described hydrolyzable reactive group and the above-described substituent having the reactive group are bonded to one of the silicon atoms. It is more preferable that the silane coupling agent has a (meth)acryloyl group. Specific examples of the silane coupling agent include a silane coupling agent represented by Formula (1) in WO2013/146069A and a silane coupling agent represented by Formula (I) in WO2013/027786A.

A ratio of the silane coupling agent to solid contents (residue after volatile components are volatilized) of the polymerizable composition is preferably 0.1 mass% to 30 mass% and more preferably 1 mass% to 20 mass%.

### (Urethane Acrylate Polymer)

As described above, the second organic layer of the barrier laminate is formed of a polymerizable composition including a urethane acrylate polymer. The polymerizable composition for forming the first organic layer or another organic layer included in the barrier laminate according to the present invention may or may not include the urethane acrylate polymer. However, it is preferable that the polymerizable composition include the urethane acrylate polymer.
the urethane acrylate polymer has a structure which includes an acrylic main chain and a side chain including a urethane polymer unit or a urethane oligomer unit, and the side chain has an acryloyl group at a terminal position (of the side chain).

That is, the urethane acrylate polymer used in the present invention is not particularly limited as long as it is a copolymer having a structure in which urethane monomer units as side chains are disposed at sites of a monomer unit of the acrylic main chain as a stem. In general, the urethane acrylate polymer has a structure which is formed by graft copolymerization.

The acrylic main chain in the urethane acrylate polymer may be a homopolymer formed by homopolymerization of a (meth)acrylate monomer, an ethyl acrylate monomer, or may be a copolymer of any one of the above-described monomers or a copolymer of any one of the above-described monomer and another monomer. For example, it is preferable that the acrylic main chain is a copolymer obtained from (meth)acrylic acid ester and ethylene.

At least a part of side chains bonded to the acrylic main chain are side chains including a urethane polymer unit or a urethane oligomer unit. The urethane acrylate polymer may include plural urethane polymer units having different molecular weights or plural urethane oligomer units having different molecular weights. The molecular weight of the urethane polymer unit is, for example, 3000 to 4000. In addition, the molecular weight of the urethane oligomer unit is, for example, 350 to 600.

The urethane acrylate polymer may have both of a side chain including a urethane polymer unit and a side chain including a urethane oligomer unit.

The acrylic main chain and a urethane polymer unit or a urethane oligomer unit may be bonded to each other directly or through another linking group. Examples of the linking group include an ethylene oxide group, a polyethylene oxide group, a propylene oxide group, and a polypropylene oxide group. The urethane acrylate polymer may include plural side chains in which a urethane polymer unit or a urethane oligomer unit is bonded to the acrylic main chain through a different linking group (including direct bonding).

At least a part of side chains including a urethane polymer unit or a urethane oligomer unit have a (meth)acryloyl group at a terminal position (of the side chain). It is preferable that all the side chains including a urethane polymer unit or a urethane oligomer unit in the urethane acrylate polymer have a (meth)acryloyl group at a terminal position (of the side chain). It is preferable that the terminal (meth)acryloyl group is an acryloyl group.

The urethane acrylate polymer may have another side chain in addition to the side chain including a urethane polymer unit or a urethane oligomer unit. Examples of the other side chain include a linear or branched alkyl group. As the linear or branched alkyl group, a linear alkyl group having 1 to 6 carbon atoms is preferable, an n-propyl group, an ethyl group, or a methyl group is more preferable, and a methyl group is still more preferable.

The urethane acrylate polymer may have a structure including plural side chains which are different, for example, in the molecular weight of a urethane polymer unit or a urethane oligomer unit or in a linking group, or may have a structure including the plural other side chains described above.

The weight average molecular weight of the urethane acrylate polymer is preferably 10,000 or higher, more preferably 12,000 or higher, and still more preferably 15,000 or higher. In addition, the weight average molecular weight of the urethane acrylate polymer is preferably 1,000,000 or lower, more preferably 500,000 or lower, and still more preferably 300,000 or lower. In a case where the weight average molecular weight of the urethane acrylate polymer is 10,000 or higher, it is difficult to vaporize the urethane acrylate polymer. Therefore, it is preferable that a layer including the urethane acrylate polymer is formed using an application method.

In this specification, the weight average molecular weight of a polymer compound refers to a value measured by gel permeation chromatography (GPC). In the measurement, unless specified otherwise, HLC-8020GPC (manufactured by Tosoh Corporation) is used, and TSKgel Super HZM-H, TSKgel Super HZ4000, or TSKgel Super HZ200 (manufactured by Tosoh Corporation) is used as a column. A carrier may be appropriately selected, and tetrahydrofuran is used as long as it is soluble. The acrylic equivalent of the urethane acrylate polymer may be 500 or higher and is preferably 600 or higher, and more preferably 700 or higher. In addition, the acrylic equivalent of the urethane acrylate polymer is preferably 5,000 or lower, more preferably 3,000 or lower, and still more preferably 2,000 or lower.

As the urethane acrylate polymer, for example, an UV curable acrylic urethane polymer (8BR series, manufactured by Taisei Fine Chemical Co., Ltd.) can be used.

A ratio of the urethane acrylate polymer to solid contents (residue after volatile components are volatilized) of the polymerizable composition is preferably 5 mass% to 90 mass% and more preferably 10 mass% to 80 mass%.

Regarding the problem of the related art that a barrier laminate is likely to peel off from an infusion solution bag when used in the infusion solution bag, the present inventors presumed that the specific reasons for the problem are, for example, as follows: the adhesiveness between the organic layer and the inorganic layer is likely to be insufficient due to compressive stress (volume contraction) of the second organic layer; and the infiltration of an adhesive into the organic layer is insufficient due to a dense three-dimensional net structure of the organic layer such that the adhesiveness between the organic layer and the adhesive layer for adhesion with a resin film is likely to be low. By using the second organic layer which is formed of the above-described polymerizable composition including a urethane acrylate polymer, volume contraction caused by polymerization can be released while improving the adhesion with the inorganic layer, a sufficient hardness of the barrier laminate as a protective layer can be maintained, and the barrier laminate which is not likely to peel off from an infusion solution bag when used in the infusion solution bag can be manufactured. By adjusting the content of the urethane acrylate polymer of the composition for forming the second organic layer, the kind of the additive, and the side chain structure, molecular weight, and acrylic equivalent of the urethane acrylate polymer, characteristics of the second organic layer to be formed are adjusted, and a barrier laminate which is not likely to be defective with respect to an adhesive layer or a resin film used during the preparation of an infusion solution bag can be manufactured.

### (Method of Forming Organic Layer)

In order to form an organic layer, first, the above-described polymerizable composition is layered. In order to layer the polymerizable composition, typically, the polymerizable composition is applied to a support such as a substrate or an inorganic layer. Examples of the application method include a dip coating method, an air knife coating method, a curtain coating method, a roller coating method, a wire bar coating method, a gravure coating method, a slide coating method, and an extrusion coating method (also called a die coating method) using a hopper described in US2681294A. Among these, an extrusion coating method can be preferably adopted.

It is preferable that the polymerizable composition for forming the second organic layer is applied to a surface of the inorganic layer using an extrusion coating method. The reason for this is as follows. When the polymerizable composition is applied to the inorganic layer using an extrusion coating method, only liquid comes into contact with the inorganic layer without direct contact between the inorganic layer and an application device. Therefore, a damage such as a crack or a fracture caused by physical contact is not likely to occur in the inorganic layer.

Next, the applied polymerizable composition may be dried. For example, a material including the polymerizable composition, which has been applied as described above, is transported to a drying unit and is provided for a drying step. In a preferable aspect, the drying unit includes a front-surface-side drying unit of heating the polymerizable composition from a front surface side (coating film side) for drying; and a back-surface-side drying unit of heating the polymerizable composition from a back surface side for drying such that the applied polymerizable composition is dried from both of the front surface side and the back surface side. For example, the front-surface-side drying unit may be a warm-air drying unit, and the back-surface-side may be a heat roller (a pass roller having a heating mechanism).

The drying unit may dry the applied polymerizable composition by heating the support. During the formation of the organic layer, the polymerizable composition may be sufficiently heated from the inorganic layer side so as to be dried. Drying means is not particularly limited, and any drying means may be used as long as the polymerizable composition can be dried (an organic solvent can be removed) to be polymerized using this drying means before the support, to which the polymerizable compound is applied, reaches a light irradiating unit according to a support transport rate, the support being a material on which an organic layer is formed. Specific examples of the drying means include a heat roller and a warm air dryer, and a heat exchanger plate.

By using this drying means, the hydrolysis reaction of the silane coupling agent is promoted, the polymerizable composition can be effectively cured, and the layers can be formed without damaging the substrate film. Among these drying means, one kind may be used alone, or a combination of two or kinds may be used. Any well-known drying means can also be used.

The polymerizable composition may be cured by light (for example, ultraviolet rays), electron beams, or heat rays. It is preferable that the polymerizable composition is cured by light. In particular, it is preferable that the polymerizable composition is cured while heated at a temperature of 25°C or higher (for example, 30°C to 130°C). By promoting the free movement of the polymerizable composition by heating, the polymerizable composition can be effectively cured, and the layers can be formed without damaging the substrate film.

The irradiation light may be ultraviolet rays emitted from a high-pressure mercury lamp or a low-pressure mercury lamp. The irradiation energy is preferably 0.1 J/cm² or higher and more preferably 0.5 J/cm² or higher. The polymerization of the polymerizable compound is inhibited by oxygen in the air. Therefore, it is preferable that the oxygen concentration or oxygen partial pressure during the polymerization decreases. In a case where the oxygen concentration during the polymerization is decreased using a nitrogen substitution method, the oxygen concentration is preferably 2% or lower and more preferably 0.5% or lower. In a case where the oxygen partial pressure during the polymerization is decreased using an evacuation method, the total pressure is preferably 1000 Pa or lower and more preferably 100 Pa or lower. In addition, it is more preferable that ultraviolet polymerization is performed by irradiation at an energy of 0.5 J/cm² or higher under reduced pressure conditions of 100 Pa or lower.

The polymerization ratio of the polymerizable compound in the polymerizable composition after curing is preferably 20 mass% or higher, more preferably 30 mass% or higher, and still more preferably 50 mass% or higher. The polymerization ratio described herein refers to a ratio of reacted polymerizable groups to all the polymerizable groups (for example, an acryloyl group and a methacryloyl group) in a monomer mixture. The polymerization ratio can be determined by an infrared absorption method.

It is preferable that the organic layer is smooth and has high hardness. Regarding the smoothness of the organic layer, the average roughness (Ra value) of a 1 µm × 1 µm region (a square whose one side has a size of 1 µm) is preferably less than 3 nm and more preferably less than 1 nm.

It is required that foreign matter such as particles and protrusions are not present on the surface of the organic layer. Therefore, it is preferable that the organic layer is formed in a clean room. The cleanliness is preferably class 10000 or lower and more preferably class 1000 or lower.

It is preferable that the hardness of the organic layer is high. It is known that, when the hardness of the organic layer is high, the inorganic layer is formed to be smooth, which improves barrier performance. The hardness of the organic layer can be represented as a microhardness based on a nano-indentation method. The microhardness of the organic layer is preferably 100 N/mm or higher and more preferably 150 N/mm or higher.

### (First Organic Layer and Second Organic Layer)

The first organic layer and the second organic layer may be formed of polymerizable compositions having the same composition or may be formed of polymerizable compositions having different compositions. However, it is preferable that the first organic layer and the second organic layer are formed of polymerizable compositions having different compositions. The polymerizable composition including a urethane acrylate polymer exhibits the effect, in particular, by being used in the second organic layer formed on a surface of the inorganic layer.

The thickness of the organic layer is not particularly limited. From the viewpoints of brittleness and light transmittance, the thickness of the second organic layer is preferably 50 nm to 3000 nm, and more preferably 200 nm to 2000 nm. The thicknesses of the first organic layer and other organic layers are preferably 50 nm to 5000 nm, and more preferably 200 nm to 3500 nm.

It is preferable that the glass transition temperature (Tg) of the first organic layer is higher than Tg of the second organic layer. Tg of the organic layer can be adjusted, for example, by adjusting the acrylic equivalent of the polymerizable compound in the polymerizable composition for forming an organic layer. Specifically, Tg can be increased by using a polyfunctional acrylate with respect to the molecular weight, or by adding an acrylic material having a stable molecular structure such as an adamantane skeleton.

In addition, in a case where the barrier laminate is used in a form where an adhesive layer is provided on a surface of the second organic layer, it is preferable that at least a part of the second organic layer are dissolved in a solvent for dissolving an adhesive during the formation of the adhesive layer. For example, it is preferable that the second organic layer is dissolved in a solvent such as ethyl acetate, methyl acetate, or butyl acetate.

### (Inorganic Layer)

Typically, the inorganic layer is a thin layer formed of a metal compound. As a method of forming the inorganic layer, any method can be used as long as a desired thin film can be formed using the method. Examples of the method of forming the inorganic layer include a physical vapor deposition (PVD) method such as a vapor deposition method, a sputtering method, or an ion plating method, various chemical vapor deposition (CVD) methods, and a liquid phase growth method such as a plating method or a sol-gel method. Components included in the inorganic layer are not particularly limited as long as they satisfy the above-described performance, and examples thereof include a metal oxide, a metal nitride, a metal carbide, a metal oxynitride, and a metal oxycarbide. For example, an oxide, a nitride, a carbide, an oxynitride, or an oxycarbide including one or more metals selected from Si, Al, In, Sn, Zn, Ti, Cu, Ce, and Ta can be preferably used. Among these, an oxide, a nitride, or an oxynitride of a metal selected from Si, Al, In, Sn, Zn, and Ti is preferable, and a metal oxide, a nitride, or an oxynitride of Si or Al is more preferable. These components may include another element as an auxiliary component.

As the inorganic layer, an inorganic layer including Si is preferable. This is because the inorganic layer including Si has higher transparency and more satisfactory gas barrier properties. In particular, an inorganic layer formed of silicon nitride is preferable.

For example, by an oxide, a nitride, or an oxynitride of a metal containing hydrogen, the inorganic layer may include an appropriate amount of hydrogen. In this case, it is preferable that the hydrogen concentration in hydrogen forward scattering spectrometry is 30% or lower.

Regarding the smoothness of the inorganic layer which is formed according to the present invention, the average roughness (Ra value) of a 1 µm × 1 µm region is preferably less than 3 nm and more preferably 1 nm or less.

The thickness of the inorganic layer is not particularly limited. Typically, the thickness of the single inorganic layer is 5 nm to 500 nm, preferably 10 nm to 200 nm, and more preferably 15 nm to 50 nm. The inorganic layer may have a laminate structure including plural sub-layers. In this case, the respective compositions of the sub-layers may be the same as or different from each other.

### (Lamination of Organic Layer and Inorganic Layer)

The organic layer and the inorganic layer can be laminated by sequentially repeating the formation of the organic layer and the inorganic layer according to the desired layer configuration.

In particular, in the present invention, it is preferable that the inorganic layer is formed on the surface of the first organic layer.

### (Functional Layer)

The barrier laminate according to the present invention may have a functional layer. The details of the functional layer will be specifically described in paragraphs "0036" to "0038" of JP2006-289627A. Examples of other functional layers include a matting agent layer, a protective layer, a solvent resistant layer, an antistatic layer, a smoothing layer, an adhesion improving layer, a light shielding layer, an anti-reflection layer, a hard coat layer, a stress relaxation layer, an anti-fog layer, an antifouling layer, a printing object layer, and an easily adhesive layer.

### <Gas Barrier Film>

The gas barrier film includes a substrate film and a barrier laminate that is formed on the substrate film. In the gas barrier film, the barrier laminate may be provided only a single surface of the substrate film or may be provided on both surfaces thereof. It is preferable that the barrier laminate has a structure in which a first organic layer, an inorganic layer, and a second organic layer are laminated in this order from the substrate film. The outermost layer of the barrier laminate according to the present invention may be an inorganic layer or an organic layer. However, it is preferable that the outermost layer is the second organic layer.

The gas barrier film may include constituent elements (for example, a functional layer such as an easily adhesive layer) in addition to the barrier laminate and the substrate film. The functional layer may be provided on the barrier laminate, between the barrier laminate and the substrate film, or on a surface (back surface) of the substrate film where the barrier laminate is not provided.

The thickness of the gas barrier film is preferably 20 µm to 200 µm and more preferably 30 µm to 150 µm.

### (Substrate Film)

In the gas barrier film, typically, a plastic film is used as the substrate film. The material, thickness, of the plastic film to be used are not particularly limited as long as the barrier laminate can be held on the plastic film. For example, the plastic film can be appropriately selected according to the intended use. Specific examples of the plastic film include thermoplastic resins such as a polyester resin, a methacrylic resin, a methacrylic acid-maleic acid copolymer, a polystyrene resin, a transparent fluororesin, polyimide, a fluorinated polyimide resin, a polyamide resin, a polyamide imide resin, a polyether imide resin, a cellulose acylate resin, a polyurethane resin, a polyether ether ketone resin, a polycarbonate resin, alicyclic polyolefin resin, a polyarylate resin, a polyethersulfone resin, a polysulfone resin, a cycloolefin copolymer, a fluorine ring-modified polycarbonate resin, an alicyclic modified polycarbonate resin, a fluorene ring-modified polyester resin, or an acryloyl compound.

The thickness of the substrate film is preferably 15 µm to 200 µm and more preferably 25 µm to 150 µm.

### <Use of Barrier Laminate>

The barrier laminate and the gas barrier film according to the present invention can be used as, for example, a packaging material. In addition, the barrier laminate and the gas barrier film according to the present invention can be used as a member for imparting barrier properties to a packaging material in a laminated film which is prepared by adhering a resin film to the barrier laminate and the gas barrier film. In particular, it is preferable that the barrier laminate according to the present invention is used as a part of an infusion solution bag. Hereinafter, the details will be described.

### <Laminated Film>

The laminated film has a structure in which a sealant film is laminated on a barrier film including a substrate film and a barrier laminate (gas barrier layer). The barrier laminate includes at least one organic layer and at least one inorganic layer. The sealant film may be laminated on the barrier film, for example, through an adhesive layer.

Fig. 1 shows an example of the laminated film. In Fig. 1, reference numeral 1 represents a substrate film, reference numeral 2 represents a first organic layer, reference numeral 4 represents a second organic layer, reference numeral 3 represents an inorganic layer, reference numeral 5 represents an adhesive layer, and reference numeral 6 represents a sealant film.

In an embodiment shown in Fig. 1, the barrier laminate is configured to include three layers including the first organic layer, the inorganic layer, and the second organic layer.

In the embodiment shown in Fig. 1, the adhesive layer and the sealant film are in contact with each other. However, another layer may be provided between the adhesive layer and the sealant film. Examples of the other layer include an easily adhesive layer. In addition, an oxygen-absorbing resin film and an adhesive layer may be provided between the adhesive layer and the sealant film. That is, a configuration of substrate film/barrier laminate/adhesive layer/oxygen-absorbing resin film/adhesive layer/sealant film may be adopted. The oxygen-absorbing resin layer may not be provided. However, by providing the oxygen-absorbing resin layer, oxygen barrier properties are further improved.

The thickness of the laminated film may be 10 µm to 300 µm and may be 20 µm to 200 µm. Since the thickness of the laminated film is small, the infiltration of water vapor or oxygen from a side surface thereof can be efficiently prevented.

The oxygen transmission of the laminated film under conditions of a temperature of 40°C, 1 atom, and a relative humidity of 90% is preferably 0.1 mL/m²/day/atm or lower and more preferably 0.01 mL/m²/day/atm or lower.

In addition, the water vapor transmission rate of the laminated film under conditions of a temperature of 40°C, 1 atom, and a relative humidity of 90% is preferably 0.01 g/m²/day or lower and more preferably 0.001 g/m²/day or lower.

It is preferable that the laminated film satisfies both of the above-described oxygen transmission rate and the water vapor transmission rate.

### (Adhesive Layer)

In order to adhere the sealant film and the barrier laminate to each other, an adhesive layer may be provided. Further, in a case where another functional film is provided, an adhesive layer may be used for adhesion with the film.

Examples of an adhesive included in the adhesive layer include an epoxy resin adhesive, a polyurethane adhesive, an ethylene vinyl acetate adhesive, and an acrylic resin adhesive. Among these, a polyurethane adhesive is preferable. In addition, the adhesive layer may include components in addition to the adhesive, and it is preferable that the amount of these components is 1 mass% or lower with respect to the total amount of the adhesive layer.

The thickness of the adhesive layer is preferably 0.1 µm to 50 µm, preferably 1 µm to 30 µm, and still more preferably 1 µm to 5 µm.

During the formation of the adhesive layer, the adhesive may infiltrate into the second organic layer. As a result, a mixed layer may be formed between the second organic layer and the adhesive layer.

### (Sealant Film)

The sealant film has no adhesive force at room temperature. Sealant films are adhered to each other by heating the sealant films to melt in a state where they overlap each other and compressing and cooling the sealant films. Typically, the sealant films may be adhered to each other.

The sealant film may be a resin film, and examples of the resin include polyethylene, polypropylene, an ethylene vinyl acetate copolymer (EVA), an ionomer, and an acrylic copolymer resin. Specific examples of polyethylene and polypropylene include polyethylene (PE), low-density polyethylene (LDPE), linear low-density polyethylene (LLDPE), and cast polypropylene (CPP). As the sealant film, a resin film including PE, LDPE, LLDPE, or CPP is preferable from the viewpoint of dampproofness, and it is preferable that PE, LDPE, LLDPE, or CPP accounts for 90 mass% or higher, preferably 95 mass% or higher, and more preferably 99 mass% or higher with respect to all the resin components. Various additives may be added to the sealant film. Examples of the additives include an anti-blocking agent, a lubricant, an antistatic agent, an antioxidant, an anti-fog agent, an organic or inorganic pigment, a ultraviolet absorber, and a dispersant.

It is preferable that the sealant film is transparent. Being transparent described herein represents a light transmittance being 50% or higher, preferably, 70% or higher.

The thickness of the sealant film is preferably 1 µm to 100 µm and more preferably 2 µm to 70 µm.

The sealant film is not particularly limited as long as it can be melted by heat to adhere the laminated film and another film to each other. However, it is preferable that the sealant film is a film having a sealant layer. The composition of the sealant film in the laminated film may be the same as or different from that of a sealant such as a packaging material which is adhered to the sealant film. Since the sealant film and the sealant are adhered to each other by heat sealing, it is preferable that 95% mass% or higher of the compositions thereof is the same.

In addition, it is preferable that the sealant film has barrier properties. The other film may be the above-described laminated film. For example, a bag-shaped packaging material can be manufactured by disposing the two laminated films to overlap each other and adhering outer peripheral portions thereof to each other, or by folding one laminated film and adhering outer peripheral portions thereof other than the folded portion to each other.

### (Packaging Material)

The kind of the packaging material to which the laminated film is applied is not particularly limited. However, since the barrier properties of the laminated film to be used are satisfactory, it is preferable that the laminated film is applied to, in particular, a material which is used for the packaging of a product in which gas barrier properties are required. Examples of the product to be packaged include food, non-food, and chemicals. The state of the product to be packaged may be any one of liquid, solid, or powder. It is preferable that the packaging material has a pouch shape or a bag shape by appropriately performing the heat sealing of the laminated film. Specific examples of the packaging material include a packaging bag for food, a packaging bag for chemicals, and an infusion solution bag.

In particular, for example, in a case where the packaging material is an infusion solution bag, the packaging material may have a configuration in which the laminated film is adhered to a previously bag-shaped film including a resin film which functions as a sealant film. At this time, the laminated film may be adhered to the bag such that the laminated film is disposed on both surfaces of the bag or such that the laminated film is disposed on only a single surface of the bag. In a case where the laminated film is disposed on only a single surface of the bag, it is preferable that another film (for example, an aluminum film) is disposed on the other surface of the bag so as to maintain sealing properties. In the bag, it is only necessary that the outermost layer thereof to which the above-described laminated film is adhered is formed of the sealant film.

Examples of the bag including a resin film include a bag in which two resin films are adhered to each other and a bag in which one resin film is folded and adhered.

Typically, end portions of a resin film may be completely adhered except for a necessary extraction port (for example, a liquid discharge port of an infusion solution bag).

The thickness of the resin film of the bag including the resin film is preferably 20 µm to 200 µm.

In a case where two resin films are adhered to each other to form a bag, the two resin films may be the same as or different from each other. However, it is preferable that the two resin films are the same as each other. In a case where the two resin films are the same as each other, the two resin films can be easily adhered to each other using a heat sealing method.

### (Heat Sealing)

The laminated film and the packaging material may be adhered to each other by heat sealing. Typically, the heat sealing temperature can be determined based on a melting point of a sealant film included in the laminated film. For example, in a case where the sealant film is polypropylene, the heat sealing temperature is preferably 160°C to 220°C.

In addition, the heat sealing time may be typically 0.2 seconds to 20 seconds and is preferably 0.5 seconds to 10 seconds and more preferably 1 second to 10 seconds. The heat sealing pressure is preferably 0.01 MPa to 5 Mpa.

### <Infusion Solution Bag>

The infusion solution bag may be a single type in which one bag used or a dual type in which two bags are used. Examples of the duplex infusion solution bag include a dual bag including: a powder containing chamber; and a liquid containing chamber that is separated from the powder containing chamber by an easily peelable partition wall. In this case, immediately before use, the partition wall peels off to mix powder and liquid with each other, and the mixture is infused through a liquid discharge port. In this case, it is preferable that the infusion solution bag according to the present invention is used as the powder containing chamber.

Examples of chemicals used in the infusion solution bag include liquid which is administered, for example, hypodermically, intravascularly, or intraperitoneally by intravenous drip infusion. Examples of chemicals used in the dual bag include liquid such as powder chemicals or normal saline. Examples of the powder chemicals include a nutritional supplement such as vitamins or amino acid, antibiotics, and an antibacterial agent.

In addition, techniques described in JP2003-230618A and JP1998-201818A (JP-H10-201818A) can be considered.

### Examples

Hereinafter, the present invention will be described in detail using Examples. Materials, used amounts, ratios, treatment details, and treatment procedures shown in the following Examples can be appropriately changed.

### (Preparation of Gas Barrier Film)

A barrier laminate was formed on a single surface of a polyethylene terephthalate film (PET film, manufactured by Toyobo Co., Ltd., trade name: COSMO SHINE A4300, thickness: 100 µm, width: 1000 mm, length: 100 m) in the following procedure, and was evaluated.

Trimethylolpropane triacrylate (TMPTA, manufactured by Daicel-Cytec Co Ltd.) and a photopolymerization initiator (ESACURE KTO 46, manufactured by Lamberti S.p.A.) were prepared and were weighed such that a weight ratio thereof was 95:5. These components were dissolved in methyl ethyl ketone. As a result, a coating solution having a solid content concentration of 15% was obtained. This coating solution was applied to the above-described PET film using a roll-to-roll method with a die coater and was allowed to pass through a drying zone at 50°C for 3 minutes. Next, the coating solution was irradiated with ultraviolet rays (cumulative irradiation amount: about 600 mJ/cm²) to be cured, and the PET film was wound. The thickness of the first organic layer formed on the PET film as a support was 1 µm.

Next, using a roll-to-roll CVD apparatus, an inorganic layer (silicon nitride layer) was formed on a surface of the organic layer. As raw material gases, silane gas (flow rate: 160 sccm; a standard state of 0°C and 1 atm, and hereinafter the same shall be applied), ammonia gas (flow rate: 370 sccm), hydrogen gas (flow rate: 590 sccm), and nitrogen gas (flow rate: 240 sccm) were used. As a power supply, a high-frequency power supply having a frequency of 13.56 MHz was used. The film forming pressure was 40 Pa, and the achieved thickness was 50 nm. In this way, the inorganic layer was laminated on a surface of the first organic layer.

Further, a second organic layer was laminated on a surface of the inorganic layer. The second organic layer was formed in the following procedure. A urethane acrylate polymer (ACRYD 8BR 930, manufactured by Taisei Fine Chemical Co., Ltd.; weight average molecular weight: 1600, acrylic equivalent: 800), an additive, a silane coupling agent (KBM 5103, manufactured by Shin-Etsu Chemical Co., Ltd.), and a photopolymerization initiator (IRG 184, manufactured by Ciba Specialty Chemicals Inc.) were weighed at a mixing ratio shown in Table 1. These components were dissolved in methyl ethyl ketone. As a result, a coating solution (solid content concentration: 15%) was obtained. Using this coating solution, the second organic layer was formed. In Table 1, DPHA added as the additive is a polyfunctional acrylate (manufactured by Daicel-Cytec Co Ltd.), and VYLON U1410 is a urethane polymer (manufactured by Toyobo Co., Ltd.). In addition, in Comparative Examples shown in Table 1, TMPTA was used instead of the urethane acrylate polymer.

This coating solution was directly applied to a surface of the above-described inorganic layer using a roll-to-roll method with a die coater and was allowed to pass through a drying zone at 100°C for 3 minutes. Next, while holding the PET film with a heat roll heated to 60°C, the coating solution was irradiated with ultraviolet rays (cumulative irradiation amount: about 600 mJ/cm²) to be cured, and the PET film was wound. The thickness of the second organic layer formed on the PET film as a support was 1 µm.

In this way, a gas barrier film including the PET film, the first organic layer, the inorganic layer, and the second organic layer in this order was obtained. When the second organic layer was evaluated, a double bond was observed, which represented that an acryloyl group was present at a terminal position (of the side chain) of a urethane polymer side chain.

According to JIS K 5600-5-4, the pencil hardness of the obtained second organic layer was measured and evaluated.

### (Preparation of Laminated Film)

Each of the gas barrier films as described above and a resin film as a sealant film (polypropylene film, manufactured by Toray Advanced Film Co., Ltd., thickness: 30 µm, melting point: about 161 °C) were adhered to each other through a polyurethane adhesive (main agent: polyester polyol (RU-77T, manufactured by Rock Paint Co., Ltd.), curing agent: aliphatic isocyanate (H-7, manufactured by Rock Paint Co., Ltd.)) so as to obtain a layer configuration shown below. As a result, a laminated film was obtained. The thickness of the adhesive layer was 3 µm.

Layer configuration: PET film/first organic layer/inorganic layer/second organic layer/adhesive layer/sealant film

### (Evaluation of Adhesion Strength of Laminated Film: Peel Test)

Each of the laminated films obtained as described above was cut into a strip shape having a size of 25 mm×50 mm, and an upper portion having a size of 5 mm peeled off from the strip using a peel tester to measure the adhesion strength. This adhesion strength was evaluated based on the following criteria. The results are shown in Table 1.

### Evaluation Criteria of Peel Test

A: 8 N/25 mm or higher
B: 6 N/25 mm or higher and lower than 8 N/25 mm
C: 4 N/25 mm or higher and lower than 6 N/25 mm
D: 2 N/25 mm or higher and lower than 4 N/25 mm
E: lower than 2 N/25 mm

### (Adhesion between Laminated Film and Bag Including Resin Film)

The sealant film (resin film) side of the obtained laminated film and a bag including a resin film (bag formed of polypropylene) were adhered to each other using a heat sealing method. As a result, an infusion solution bag was prepared.

Heat sealing was performed by heating the entire surface at 180°C under 0.1 MPa for 1 second.

### (Gas Barrier Performance of Infusion Solution Bag)

In the infusion solution bag obtained as described above, the water vapor transmission rate of a surface where the laminated film was provided was measured using a calcium method. Specifically, the water vapor transmission rate (g/m²/day) was measured using a method described in G. NISATO; P.C.P. BOUTEN; P.J. SLIKKERVEER et al., SID Conference Record of the International Display Research Conference, pp. 1435 to 1438. The measurement was performed under conditions of a temperature of 40°C and a relative humidity of 90%. The results are shown in Table 1. Evaluation Criteria of Water Vapor Transmission Rate (Values in "()" represents the water vapor transmission rate assuming that the conditions were 25°C and 50%)
A: lower than 4.1×10⁻⁵ g/m² (0.9×10⁻⁶)
B: 4.1×10⁻⁵ g/m² or higher and lower than 2.1×10⁻⁴ g/m² (5×10⁻⁵)
C: 2.1×10⁻⁴ g/m² or higher and lower than 4.1×10⁻⁴ g/m² (9×10⁻⁵)
D: 4.1×10⁻⁴ g/m² or higher

### (Evaluation of Adhesiveness of Infusion Solution Bag: Bag Dropping Test)

The infusion solution bag was dropped at a height of 1 m from the ground, and whether or not peeling occurred in an edge portion was evaluated by visual inspection. The results are shown in Table 1.

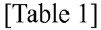

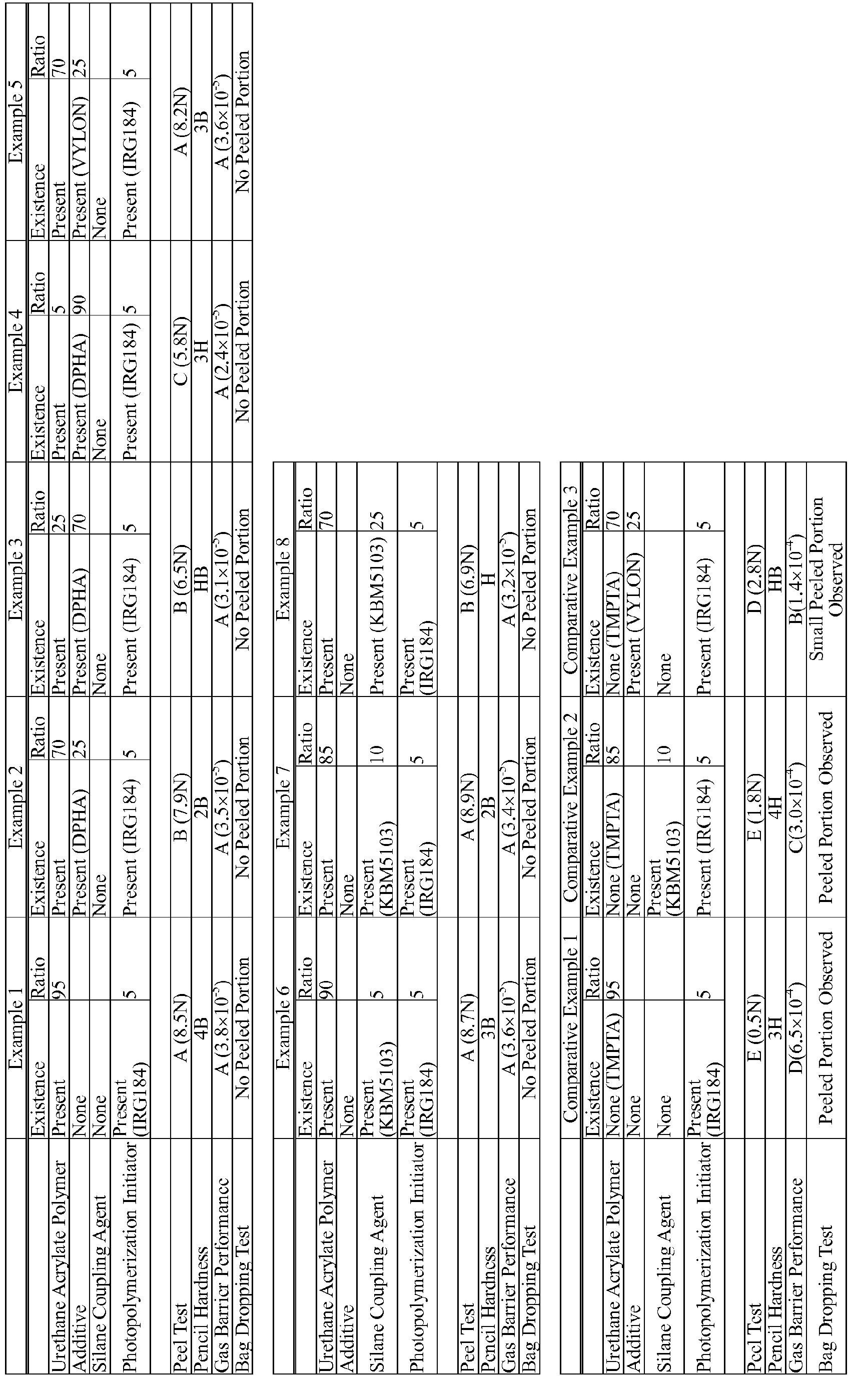

### Explanation of References

1: substrate film
2: first organic layer
3: inorganic layer
4: second organic layer
5: adhesive layer
6: resin film

## Claims

1. A barrier laminate comprising a first organic layer, an inorganic layer, and a second organic layer in this order,
wherein the second organic layer is formed by curing a polymerizable composition which is directly applied to a surface of the inorganic layer,
the polymerizable composition includes a urethane acrylate polymer,
the urethane acrylate polymer has a structure which includes an acrylic main chain and a side chain including a urethane polymer unit or a urethane oligomer unit, and
the side chain has an acryloyl group at a terminal position of the side chain.

2. The barrier laminate according to claim 1,
wherein a weight average molecular weight of the urethane acrylate polymer is 10,000 or higher.

3. The barrier laminate according to claim 1 or 2,
wherein an acrylic equivalent of the urethane acrylate polymer is 500 or higher.

4. The barrier laminate according to any one of claims 1 to 3,
wherein the polymerizable composition includes one or more selected from the group consisting of (meth)acrylate, urethane (meth)acrylate, polyester (meth)acrylate, epoxy (meth)acrylate, an acrylic polymer, and a urethane polymer.

5. The barrier laminate according to any one of claims 1 to 4,
wherein the polymerizable composition includes a silane coupling agent.

6. The barrier laminate according to any one of claims 1 to 5,
wherein a content of the urethane acrylate polymer in the polymerizable composition is 5 mass% or higher with respect to solid contents of the polymerizable composition.

7. The barrier laminate according to any one of claims 1 to 6,
wherein the first organic layer and the inorganic layer are in contact with each other.

8. The barrier laminate according to any one of claims 1 to 7,
wherein a pencil hardness of the second organic layer is 4B or higher and wherein the pencil hardness was measured and evaluated according to JIS K 5600-5-4.

9. The barrier laminate according to any one of claims 1 to 8,
wherein Tg of the first organic layer is higher than Tg of the second organic layer.

10. A gas barrier film comprising a substrate film and the barrier laminate according to any one of claims 1 to 9,
wherein the substrate film, the first organic layer, the inorganic layer, and the second organic layer are provided in this order.

11. The gas barrier film according to claim 10,
wherein the first organic layer is formed by curing a polymerizable composition which is directly applied to a surface of the substrate film.

12. A laminated film comprising a substrate film, the barrier laminate according to any one of claims 1 to 9, an adhesive layer, and a sealant film in this order,
wherein the second organic layer and the adhesive layer are in direct contact with each other.

13. The laminated film according to claim 12,
wherein the first organic layer is formed by curing a polymerizable composition which is directly applied to a surface of the substrate film.

14. The laminated film according to claim 13,
wherein the sealant film includes a polyethylene resin and/or a polypropylene resin.

15. The laminated film according to claim 13 or 14,
wherein the adhesive layer is formed of a polyurethane adhesive.

16. An infusion solution bag comprising the laminated film according to any one of claims 12 to 15.

17. A barrier laminate comprising a first organic layer, an inorganic layer, and a second organic layer in this order,
wherein the second organic layer includes a urethane acrylate polymer and is directly formed on the inorganic layer,
the urethane acrylate polymer has a structure which includes an acrylic main chain and a side chain including a urethane polymer unit or a urethane oligomer unit, and
the side chain has an acryloyl group at a terminal position of the side chain.

18. A method of manufacturing a barrier laminate, the method comprising:
forming a first organic layer;
forming an inorganic layer on the first organic layer; and
forming a second organic layer by directly applying a polymerizable composition to a surface of the inorganic layer and curing the polymerizable composition,
wherein the polymerizable composition includes a urethane acrylate polymer,
the urethane acrylate polymer has a structure which includes an acrylic main chain and a side chain including a urethane polymer unit or a urethane oligomer unit, and
the side chain has an acryloyl group at a terminal position of the side chain.

## Patentansprüche

1. Sperrlaminat, umfassend eine erste organische Schicht, eine anorganische Schicht und eine zweite organische Schicht in dieser Reihenfolge,
worin die zweite organische Schicht gebildet ist durch Härten einer polymerisierbaren Zusammensetzung, die direkt auf die Oberfläche der anorganischen Schicht aufgetragen wird,
worin die polymerisierbare Zusammensetzung ein Urethan-Acrylat-Polymer enthält,
wobei das Urethan-Acrylat-Polymer eine Struktur aufweist, die eine Acryl-Hauptkette und eine Seitenkette, die eine Urethan-Polymereinheit oder eine Urethan-Oligomereinheit enthält, enthält, und
worin die Seitenkette eine Acryloylgruppe endständig an der Seitenkette aufweist.

2. Sperrlaminat gemäß Anspruch 1, worin das gewichtsgemittelte Molekulargewicht des Urethan-Acrylat-Polymers 10.000 oder höher ist.

3. Sperrlaminat gemäß Anspruch 1 oder 2, worin das Acryl-Äquivalent des Urethan-Acrylat-Polymers 500 oder größer ist.

4. Sperrlaminat gemäß irgendeinem der Ansprüche 1 bis 3, worin die polymerisierbare Zusammensetzung eines oder mehrere enthält, ausgewählt aus der Gruppe, bestehend aus (Meth)acrylaten, Urethan(meth)acrylaten, Polyester(meth)acrylaten, Epoxy(meth)acrylaten, einem Acrylpolymer und einem Urethanpolymer.

5. Sperrlaminat gemäß irgendeinem der Ansprüche 1 bis 4, worin die polymerisierbare Zusammensetzung ein Silankupplungsmittel enthält.

6. Sperrlaminat gemäß irgendeinem der Ansprüche 1 bis 5, worin der Mengenanteil des Urethan-Acrylat-Polymers in der polymerisierbaren Zusammensetzung 5 Masse-% oder größer beträgt, bezogen auf die festen Bestandteile der polymerisierbaren Zusammensetzung.

7. Sperrlaminat gemäß irgendeinem der Ansprüche 1 bis 6, worin die erste organische Schicht und die anorganische Schicht miteinander in Kontakt stehen.

8. Sperrlaminat gemäß irgendeinem der Ansprüche 1 bis 7, worin die Stifthärte der zweiten organischen Schicht 4B oder größer beträgt, und worin die Stifthärte entsprechend JIS K 5600-5-4 gemessen und bewertet wird.

9. Sperrlaminat gemäß irgendeinem der Ansprüche 1 bis 8, worin der Tg der ersten organischen Schicht höher ist als der Tg der zweiten organischen Schicht.

10. Gassperrfolie, umfassend eine Substratfolie und ein Sperrlaminat gemäß irgendeinem der Ansprüche 1 bis 9, worin die Substratfolie, die erste organische Schicht, die anorganische Schicht und die zweite organische Schicht in dieser Reihenfolge vorgesehen sind.

11. Gassperrfolie gemäß Anspruch 10, worin die erste organische Schicht durch Härten einer polymerisierbaren Zusammensetzung gebildet ist, die direkt auf eine Oberfläche der Substratfolie aufgetragen worden ist.

12. Laminierte Folie, umfassend eine Substratfolie, das Sperrlaminat gemäß irgendeinem der Ansprüche 1 bis 9, eine Adhäsivschicht und eine Versiegelungsfolie in dieser Reihenfolge, worin die zweite organische Schicht und die Adhäsivschicht in direktem Kontakt miteinander stehen.

13. Laminierte Folie gemäß Anspruch 12, worin die erste organische Schicht durch Härten einer polymerisierbaren Zusammensetzung gebildet ist, die direkt auf eine Oberfläche der Substratfolie aufgetragen worden ist.

14. Laminierte Folie gemäß Anspruch 13, worin die Versiegelungsfolie ein Polyethylenharz und/oder ein Polypropylenharz umfasst.

15. Laminierte Folie gemäß Anspruch 13 oder 14, worin die Adhäsivschicht aus einem Polyurethan-Adhäsiv gebildet ist.

16. Infusionslösungsbeutel, umfassend die laminierte Folie gemäß irgendeinem der Ansprüche 12 bis 15.

17. Sperrlaminat, umfassend eine erste organische Schicht, eine anorganische Schicht und eine zweite organische Schicht in dieser Reihenfolge,
worin die zweite organische Schicht ein Urethan-Acrylat-Polymer enthält und direkt auf der anorganischen Schicht gebildet ist,
worin das Urethan-Acrylat-Polymer eine Struktur aufweist, die eine Acryl-Hauptkette und eine Seitenkette, die eine Urethan-Polymereinheit oder eine Urethan-Oligomereinheit enthält, umfasst, und
worin die Seitenkette eine Acryloylgruppe endständig an der Seitenkette aufweist.

18. Verfahren zur Herstellung eines Sperrlaminats, wobei das Verfahren umfasst:
Bilden einer ersten organischen Schicht;
Bilden einer anorganischen Schicht auf der ersten organischen Schicht; und
Bilden einer zweiten organischen Schicht durch Auftragen einer polymerisierbaren Zusammensetzung direkt auf eine Oberfläche der anorganischen Schicht, und Härten der polymerisierbaren Zusammensetzung,
worin die polymerisierbare Zusammensetzung ein Urethan-Acrylat-Polymer enthält,
worin das Urethan-Acrylat-Polymer eine Struktur aufweist, die eine Acryl-Hauptkette und eine Seitenkette, die eine Urethan-Polymereinheit oder eine Urethan-Oligomereinheit enthält, umfasst, und
worin die Seitenkette eine Acryloylgruppe endständig an der Seitenkette aufweist.

## Revendications

1. Stratifié barrière comprenant une première couche organique, une couche inorganique, et une seconde couche organique dans cet ordre,
dans lequel la seconde couche organique est formée en durcissant une composition polymérisable qui est appliquée directement à une surface de la couche inorganique,
la composition polymérisable comporte un polymère d'acrylate d'uréthane,
le polymère d'acrylate d'uréthane a une structure qui comporte une chaîne principale en acrylique et une chaîne latérale comportant un motif de polymère d'uréthane ou un motif d'oligomère d'uréthane, et
la chaîne latérale a un groupe acryloyle à une position terminale de la chaîne latérale.

2. Stratifié barrière selon la revendication 1,
dans lequel un poids moléculaire moyen en poids du polymère d'acrylate d'uréthane est 10 000 ou plus.

3. Stratifié barrière selon la revendication 1 ou 2,
dans lequel un équivalent acrylique du polymère d'acrylate d'uréthane est 500 ou plus.

4. Stratifié barrière selon l'une quelconque des revendications 1 à 3,
dans lequel la composition polymérisable comporte un ou plusieurs éléments choisis dans le groupe consistant en le (méth)acrylate, le (méth)acrylate d'uréthane, le (méth)acrylate de polyester, le (méth)acrylate époxy, un polymère acrylique, et un polymère d'uréthane.

5. Stratifié barrière selon l'une quelconque des revendications 1 à 4,
dans lequel la composition polymérisable comporte un agent de couplage de silane.

6. Stratifié barrière selon l'une quelconque des revendications 1 à 5,
dans lequel une teneur du polymère d'acrylate d'uréthane dans la composition polymérisable est de 5 % en masse ou plus par rapport à une teneur en matière sèche de la composition polymérisable.

7. Stratifié barrière selon l'une quelconque des revendications 1 à 6,
dans lequel la première couche organique et la couche inorganique sont en contact l'une avec l'autre.

8. Stratifié barrière selon l'une quelconque des revendications 1 à 7,
dans lequel une dureté au crayon de la seconde couche organique est 4B ou plus et dans lequel la dureté au crayon a été mesurée et évaluée selon la norme JIS K 5600-5-4.

9. Stratifié barrière selon l'une quelconque des revendications 1 à 8,
dans lequel une Tg de la première couche organique est supérieure à une Tg de la seconde couche organique.

10. Film barrière au gaz comprenant un film de substrat et le stratifié barrière selon l'une quelconque des revendications 1 à 9,
dans lequel le film de substrat, la première couche organique, la couche inorganique, et la seconde couche organique sont fournis dans cet ordre.

11. Film barrière au gaz selon la revendication 10,
dans lequel la première couche organique est formée en durcissant une composition polymérisable qui est appliquée directement à une surface du film de substrat.

12. Film stratifié comprenant un film de substrat, le stratifié barrière selon l'une quelconque des revendications 1 à 9, une couche d'adhésif, et un film d'étanchéité dans cet ordre,
dans lequel la seconde couche organique et la couche d'adhésif sont en contact direct l'une avec l'autre.

13. Film stratifié selon la revendication 12,
dans lequel la première couche organique est formée en durcissant une composition polymérisable qui est appliquée directement à une surface du film de substrat.

14. Film stratifié selon la revendication 13,
dans lequel le film d'étanchéité comporte une résine de polyéthylène et/ou une résine de polypropylène.

15. Film stratifié selon la revendication 13 ou 14,
dans lequel la couche d'adhésif est formée d'un adhésif de polyuréthane.

16. Poche de solution de perfusion comprenant le film stratifié selon l'une quelconque des revendications 12 à 15.

17. Stratifié barrière comprenant une première couche organique, une couche inorganique, et une seconde couche organique dans cet ordre,
dans lequel la seconde couche organique comporte un polymère d'acrylate d'uréthane et est formée directement sur la couche inorganique,
le polymère d'acrylate d'uréthane a une structure qui comporte une chaîne principale en acrylique et une chaîne latérale comportant un motif de polymère d'uréthane ou un motif d'oligomère d'uréthane, et
la chaîne latérale a un groupe acryloyle à une position terminale de la chaîne latérale.

18. Procédé de fabrication d'un stratifié barrière, le procédé comprenant :
la formation d'une première couche organique ;
la formation d'une couche inorganique sur la première couche organique ; et
la formation d'une seconde couche organique en appliquant directement une composition polymérisable à une surface de la couche inorganique et en durcissant la composition polymérisable,
dans lequel la composition polymérisable comporte un polymère d'acrylate d'uréthane,
le polymère d'acrylate d'uréthane a une structure qui comporte une chaîne principale en acrylique et une chaîne latérale comportant un motif de polymère d'uréthane ou un motif d'oligomère d'uréthane, et
la chaîne latérale a un groupe acryloyle à une position terminale de la chaîne latérale.
